# EUROPÄISCHE PATENTSCHRIFT

(11) **EP 4 152 108 B1**
(45) Veröffentlichungstag und Bekanntmachung des Hinweises auf die Patenterteilung: **27.08.2025**
(21) Anmeldenummer: 21197614.7
(22) Anmeldetag: 20.09.2021
(51) Int. Cl.: G05B 9/02

(54) **SICHERHEITSEINRICHTUNG UND VERFAHREN ZUM BETRIEB EINER SICHERHEITSEINRICHTUNG**
SAFETY SYSTEM AND METHOD FOR OPERATING A SAFETY SYSTEM
DISPOSITIF DE SÉCURITÉ ET PROCÉDÉ DE FONCTIONNEMENT D'UN DISPOSITIF DE SÉCURITÉ

(43) Veröffentlichungstag der Anmeldung: 22.03.2023
(73) Patentinhaber: EUCHNER GmbH + Co. KG, 70771 Leinfelden-Echterdingen (DE)
(72) Erfinder: Keller, Fabian, 72631 Aichtal (DE); Schmid, Dominik, 72663 Großbettlingen (DE)
(74) Vertreter: Ruckh, Rainer Gerhard

(56) Entgegenhaltungen:
- EP-A1- 1 936 457
- EP-A1- 3 499 324

## Beschreibung

Die Erfindung betrifft eine Sicherheitseinrichtung und ein Verfahren zum Betrieb einer Sicherheitseinrichtung.

Derartige Sicherheitseinrichtungen umfassen wenigstens ein Sicherheitsgerät und werden im Bereich der Sicherheitstechnik, insbesondere im Bereich der Maschinensicherheit eingesetzt. Mit den Sicherheitseinrichtungen wird ein überwachter und damit sicherer Betrieb von Maschinen und Anlagen gewährleistet.

Ein Beispiel für derartige Sicherheitseinrichtungen sind Sicherheitszuhaltesysteme.

Ein derartiges System ist beispielsweise von dem Sicherheitssystem MGB der Firma Euchner gebildet. Dieses Sicherheitssystem gewährleistet ein sicheres Zuhalten von beweglich trennenden Schutzeinrichtungen, insbesondere Schutztüren, und somit einen gesicherten Zugang zu eingezäunten sicherheitskritischen Gefahrenbereichen.

Dieses Sicherheitszuhaltesystem umfasst ein Zuhaltemodul, an welchem ein Griffmodul angeordnet ist. Diese Module dienen zum sicheren Zuhalten der Schutztür. Der Türdrücker des Griffmoduls kann durch Federkraft in zugehaltener Stellung gehalten werden und durch Magnetkraft entsperrt werden. Alternativ kann der Türdrücker durch Magnetkraft in zugehaltener Stellung gehalten werden und durch Federkraft entsperrt werden.

Das Zuhaltemodul kann in seiner Funktionalität dadurch erweitert sein, dass dieses zusätzliche Submodule wie zum Beispiel ein Tastenmodul als Bedieneinheit aufweist.

Bei derartigen Sicherheitseinrichtungen muss zur Erfüllung der sicherheitstechnischen Anforderungen eine fehlersichere Hardware eingesetzt werden. Diese ist hinsichtlich ihrer Funktionalitäten limitiert, da deren sichere Überwachung einen hohen Aufwand darstellt. Eine Erweiterung von Funktionalitäten kann nur durch Hardwareerweiterungen realisiert werden, was einen hohen Entwicklungs- und Kostenaufwand erfordert.

In der EP 1 936 457 A1 wird eine modulare Sicherheitsschaltvorrichtung angegeben, die mindestens ein Ausgangsmodul und eine mit allen Ausgangmodulen über einen Bus verbundene zentrale Steuerung aufweist, wobei das Ausgangsmodul für den Empfang von Eingangsdaten mindestens eines Sensors oder Schalters ausgebildet ist und mindestens einen Ausgang für einen Aktor hat, wobei die zentrale Steuerung für den Empfang zumindest eines Teils der Eingangsdaten und für deren Auswertung zur Ermittlung von Ausgabedaten an den Ausgang ausgebildet ist. Dabei weist das Ausgangsmodul eine eigene Ausgangsmodul-Steuerung auf, die für die Auswertung der Eingangsdaten gemeinsam mit der zentralen Steuerung zur Ermittlung von Ausgabedaten an den Ausgang ausgebildet ist.

In der EP 3 499 324 A1 wird ein Verfahren zum Verifizieren einer Konfiguration eines Geräts, insbesondere einer Sicherheitssteuerung, angegeben, umfassend die Schritte Unterteilen der Konfiguration des Geräts in mindestens zwei Teilkonfigurationen, die verifiziert werden, Zuteilen der Teilkonfigurationen zu zumindest einer Teilkonfigurationsfolge, bei der eine Abhängigkeit einer Verifikation der Teilkonfigurationen voneinander vorgegeben wird, Bestimmen von Parametern jeder Teilkonfiguration, wobei die Parameter zum Verifizieren der jeweiligen Teilkonfigurationen genutzt werden, Berechnen für jede Teilkonfiguration eine Einzel-Prüfsumme, die die Verifikation der Teilkonfigurationen wiedergibt, wobei bei der Verifikation einer in der Teilkonfigurationsfolge nachfolgenden Teilkonfiguration die Einzel-Prüfsumme einer vorhergehenden Teilkonfiguration nachgerechnet wird und bei einer Übereinstimmung der Einzel-Prüfsumme die Verifikation der vorhergehenden Teilkonfiguration bestätigt wird, und wobei die Konfiguration des Geräts verifiziert ist, wenn für jede Teilkonfigurationsfolge die letzte Teilkonfiguration verifiziert ist.

Der Erfindung liegt die Aufgabe zugrunde eine Sicherheitseinrichtung bereitzustellen, die flexibel nutzbar ist und mit geringem Aufwand in ihrer Funktionalität erweiterbar ist.

Zur Lösung dieser Aufgabe sind die Merkmale der unabhängigen Ansprüche beschrieben. Vorteilhafte Ausführungsformen und zweckmäßige Weiterbildungen der Erfindung sind in den abhängigen Ansprüchen beschrieben.

Die Erfindung betrifft eine Sicherheitseinrichtung nach Anspruch 1.

Die Erfindung betrifft weiterhin ein Verfahren nach Anspruch 8.

Der Grundgedanke der Erfindung besteht somit darin, dass die Sicherheitseinrichtung nicht nur das Sicherheitsgerät umfasst, sondern auch ein zugeordnetes Endgerät, das zur Realisierung von virtuellen Funktionselementen genutzt wird. Mit dem oder den virtuellen Funktionselementen können Funktionen des Sicherheitsgeräts gesteuert beziehungsweise vorgegeben werden, wodurch die Funktionalität der Sicherheitseinrichtung erweitert wird.

Die Realisierung der virtuellen Funktionselemente erfüllt die notwendigen sicherheitstechnischen Anforderungen, da die virtuellen Funktionselemente durch eine Datenübertragung zwischen der fehlersicheren Prozessoreinheit und dem Sicherheitsgerät generiert werden. Die Datenübertragung ist dabei insbesondere manipulationssicher gegen Eingriffe durch Dritte. Weiterhin ist eine Fehlersicherheit bereits durch den Einsatz der fehlersicheren Prozessoreinheit gewährleistet. Diese weist einen fehlersicheren Aufbau auf, der insbesondere durch zwei sich zyklisch gegenseitig überwachende Prozessoren realisiert sein kann. Auch sind Systeme mit mehr als zwei Prozessoren insbesondere vier Prozessoren möglich. Generell ist auch ein System mit nur einem Prozessor möglich, auf dem mehrere unabhängige Softwaremodule implementiert sind, wobei in den Softwaremodulen generierte Ergebnisse zur Fehlerkontrolle miteinander verglichen werden. Die Realisierung der fehlersicheren Prozessoreinheit hängt generell von den jeweiligen Sicherheitsanforderungen, definiert durch die geltenden Sicherheitsnormen wie zum Beispiel DIN EN ISO 13849 oder IEC 61508, ab. Schließlich ist die Sicherheit der Datenübertragung zwischen der fehlersicheren Prozessoreinheit und dem Steuerungsmodul dadurch abgesichert, dass durch wechselseitige Verifikationen und Bestätigungen von zwischen der fehlersicheren Prozessoreinheit des Sicherheitsgeräts und dem Steuerungsmodul des Endgeräts gesendeten Signalen eine fehlerhafte Realisierung von virtuellen Funktionselementen im Endgerät vermieden wird.

Damit wird die notwendige Fehlersicherheit bei der Realisierung von virtuellen Funktionselementen auch dann erreicht, wenn das Endgerät mit dem Steuerungsmodul selbst nicht fehlersicher ist. Dies reduziert den Hardwareaufwand bei der Realisierung der erfindungsgemäßen Sicherheitseinrichtung.

Mit dem oder den virtuellen Funktionselementen kann ein Benutzer von Endgeräten Funktionen des Sicherheitsgeräts steuern beziehungsweise einstellen. Vorteilhaft hierbei ist, dass die Bedienung von virtuellen Funktionselementen am Endgerät und damit unabhängig vom Installationsort des Sicherheitsgeräts erfolgen kann.

Dabei kann das Endgerät prinzipiell von einer stationären Rechnereinheit gebildet sein, die beispielsweise von einem Leitstand einer Anlage gebildet sein kann.

Besonders vorteilhaft ist das Endgerät ein mobiles Endgerät wie zum Beispiel ein Smartphone, ein Tablet, ein Personal Computer, eine AR (augmented reality)- oder auch eine VR (virtual reality)-Brille. Damit ist das Endgerät räumlich völlig unabhängig von dem Installationsort des Sicherheitsgeräts.

Dies gilt insbesondere dann, wenn zwischen dem Sicherheitsgerät und dem mobilen Endgerät eine drahtlose Datenübertragungsstrecke vorgesehen ist, das heißt allgemein eine berührungslos arbeitende Datenübertragung vorhanden ist. Vorteilhaft ist dabei die Datenübertragungsstrecke als Funkstrecke ausgebildet, wobei herkömmliche Datenverbindungen wie Bluetooth oder WLAN genutzt werden können. Generell kann natürlich auch eine leitungsgebundene Datenverbindung genutzt werden.

Das oder die virtuellen Funktionselemente bilden generell von Benutzern bedienbare Einheiten, um Funktionen für das Sicherheitsgerät vorzugeben.

Diese Vorgabe erfolgt durch geeignete Eingaben des Benutzers in das Endgerät. Je nach Ausbildung des Endgeräts können die Eingaben in herkömmlicher Weise über Tastaturen oder Touchpanels erfolgen, die bei Endgeräten wie Personal Computern, Tablets und Smartphones standardmäßig vorhanden sind.

Generell können auch Eingaben über die Stimme des Benutzers erfolgen. Auch virtuelle Eingabemöglichkeiten sind denkbar.

Ein wesentlicher Vorteil der Erfindung besteht darin, dass durch die im Endgerät erzeugten virtuellen Funktionselemente die Funktionalität des Sicherheitsgeräts erweitert werden kann, ohne dass hierzu die Hardware des Sicherheitsgeräts selbst erweitert werden muss. Damit kann die Funktionalität des Sicherheitsgeräts mittels variabel vorgebbarer virtueller Funktionselemente flexibel und einfach erweitert werden.

Generell wird zur Vorgabe von virtuellen Funktionselementen von der fehlersicheren Prozessoreinheit eine Konfiguration in das Steuerungsmodul des Endgeräts gesendet. Die Konfiguration enthält die Parameter aller möglichen virtuellen Funktionselemente für das Sicherheitsgerät. Der Benutzer kann dann aus der Konfiguration die gewünschten virtuellen Funktionselemente auswählen.

Mit den virtuellen Funktionselementen können insbesondere Funktionen des Sicherheitsgeräts aktiviert und vorgegeben werden, die mit am Sicherheitsgerät selbst vorgesehenen physikalischen Einheiten wie Bedienelementen nicht vorgegeben werden können. Beispiele hierfür sind die Aktivierung von Betriebsmodi, insbesondere Servicemodi, die mit den am Sicherheitsgerät vorhandenen Bedienelementen nicht aktivierbar sind. Ebenso kann mit den virtuellen Funktionselementen eine Einstellung von Konfigurationsparametern erfolgen. Auch können Hardware- oder Softwaremodule des Sicherheitsgeräts mit dem Sicherheitsgerät gesteuert werden.

Ein virtuelles Funktionselement kann beispielsweise von einem Konfigurationsmenü gebildet sein. Das virtuelle Funktionselement wird vorteilhaft an einer Ausgabeeinheit des mobilen Endgeräts, beispielsweise auf den Bildschirm eines Personal Computers, eines Tablets oder eines Smartphones dargestellt, so dass ein Benutzter durch Eingaben, beispielsweise auf Touchpanels, Funktionen des Sicherheitsgeräts auswählen kann oder gegebenenfalls parametrieren kann.

Erfindungsgemäß sind das oder die virtuellen Funktionselemente als virtuelle Bedieneinheiten ausgebildet. Beispielsweise werden physikalisch am Sicherheitsgerät vorgesehene Bedienelemente wie zum Beispiel Schalter oder Taster mit den virtuellen Bedieneinheiten virtuell am Endgerät, insbesondere dem mobilen Endgerät nachgebildet. Damit kann der Benutzer anstelle der Betätigung der am Sicherheitsgerät vorgesehenen Bedienelemente durch Bedienen von virtuellen Bedieneinheiten am Endgerät Funktionen des Sicherheitsgeräts einstellen. Bei einem als mobiles Endgerät ausgebildeten Endgerät kann der Benutzter die Betätigung der virtuellen Bedieneinheit an frei wählbaren Orten, unabhängig vom Installationsort des Sicherheitsgeräts vornehmen.

Besonders vorteilhaft können anhand der von der fehlersicheren Prozessoreinheit eingelesenen Konfigurationen im Endgerät auch virtuelle Bedieneinheiten generiert und aktiviert werden, die nicht als physikalische Bedienelemente am Sicherheitsgerät vorhanden sind. Damit werden mit den virtuellen Bedieneinheiten neue Bedienelemente geschaffen, die die Funktionalität des Sicherheitsgeräts erweitern. Diese Funktionserweiterung erfordert keinerlei Hardwareanpassungen am Sicherheitsgerät.

Das Sicherheitsgerät der erfindungsgemäßen Sicherheitseinrichtung kann vorteilhaft von einem Sicherheitszuhaltesystem gebildet sein. Jedoch ist die Sicherheitseinrichtung hierauf nicht beschränkt. Vielmehr kann die Sicherheitseinrichtung auch andere Sicherheitsgeräte umfassen, wie zum Beispiel Sicherheitsschalter, Busmodule, Zugangskontrollsysteme oder Sicherheitsgeräte zur Auswahl von Betriebsarten eines Sicherheitssystems.

Generell weist das Sicherheitsgerät eine fehlersichere Prozessoreinheit auf. Dabei kann die fehlersichere Prozessoreinheit im Sicherheitsgerät integriert sein oder auch mit diesem eine Baueinheit bilden, beispielsweise durch Anbau, mechanische beziehungsweise elektrische Kopplung und dergleichen. Schließlich kann es sogar ausreichend sein, wenn die fehlersichere Prozessoreinheit über Kommunikationseinheiten leitungsgebunden oder über berührungslos arbeitende Schnittstellen mit dem Sicherheitsgerät verbunden ist.

Gemäß dem erfindungsgemäßen Verfahren erfolgt zwischen der fehlersicheren Prozessoreinheit des Sicherheitsgeräts und dem Steuerungsmodul des Endgeräts eine Datenübertragung derart, dass Daten in verschlüsselter Form übertragen werden. Dadurch ist die Datenübertragung manipulationssicher und gegen Zugriffe oder Eingriffe Dritter gesichert.

Die Vorgabe von virtuellen Funktionselementen in dem Endgerät erfolgt innerhalb einer Session einer sicheren Datenübertragung, die durch ein Startsignal des Steuerungsmoduls im Endgerät initiiert wird.

Auf das Startsignal von der fehlersicheren Prozessoreinheit wird die Konfiguration an das Steuerungsmodul im Endgerät übertragen.

Die Konfiguration wird im Endgerät angezeigt und steht somit dem Benutzer zur Verfügung, so dass der Benutzer eine Auswahl von virtuellen Funktionselementen vornehmen kann.

Diese Auswahl wird vom Steuerungsmodul an die fehlersichere Prozessoreinheit gesendet.

Daraufhin wird die Auswahl durch ein von der fehlersicheren Prozessoreinheit an das Steuerungsmodul gesendetes Verifikationssignal verifiziert.

Mit dem Verifikationssignal erfolgt eine Verifizierung der getroffenen Auswahl dahingehend, ob diese zulässig und konform mit der in der fehlersicheren Prozessoreinheit vorhandenen Konfiguration ist, das heißt in der fehlersicheren Prozessoreinheit erfolgt eine Überprüfung der Auswahl.

Danach wird das Verifikationssignal von dem Steuerungsmodul durch Aussenden eines Bestätigungssignals an die fehlersichere Prozessoreinheit bestätigt, worauf die fehlersichere Prozessoreinheit ein Bestätigungssignal zur Gegenbestätigung an das Steuerungsmodul sendet, worauf das ausgewählte virtuelle Funktionselement aktiviert wird.

Durch die Verifikation und nachfolgende Bestätigung und Gegenbestätigung der Auswahl ist eine fehlersichere Bedienung der virtuellen Funktionselemente in dem Endgerät gewährleistet, wodurch die Anforderungen für den Einsatz im Bereich der Sicherheitstechnik erfüllt sind. Durch die sichere kontrollierte Auswahl der virtuellen Funktionselemente bilden diese geprüfte, fehlersichere Einheiten. Dabei ist es insbesondere nicht erforderlich, das Aussenden der Konfiguration von der fehlersicheren Prozessoreinheit an das Steuerungsmodul des Endgeräts selbst durch Verifikationssignale und Bestätigungssignale abzusichern, da die aus der Konfiguration ausgewählten virtuellen Funktionselemente selbst verifiziert und durch Bestätigungssignale kontrolliert werden. Somit wird mit geringem Aufwand eine fehlersichere Auswahl und Aktivierung von virtuellen Funktionselementen gewährleistet.

Dabei erfolgt die Aktivierung der virtuellen Funktionselemente nur dann, wenn das vorgenannte Verfahren fehlerfrei abläuft. Bei Auftreten eines Fehlers wird die Aktivierung der virtuellen Funktionselemente nicht freigegeben.

Die Erfindung wird im Folgenden anhand der Zeichnungen erläutert. Es zeigen:
- Figur 1 - 4:: Ausführungsbeispiel der erfindungsgemäßen Sicherheitseinrichtung in unterschiedlichen Phasen bei der Auswahl und Aktivierung einer virtuellen Bedieneinheit.
- Figur 5:: Ausführungsbeispiel der erfindungsgemäßen Sicherheitseinrichtung mit einer Auswahlmöglichkeit für Konfigurationsparameter.

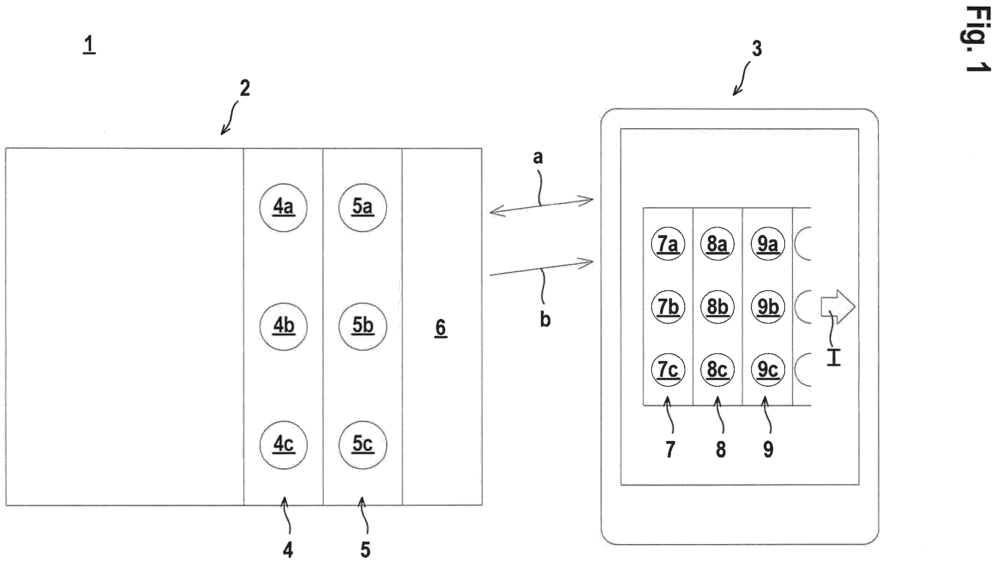

Die Figuren 1 bis 4 zeigen ein Ausführungsbeispiel der erfindungsgemäßen Sicherheitseinrichtung 1. Die Sicherheitseinrichtung 1 umfasst ein Sicherheitsgerät 2 und ein Endgerät, das im vorliegenden Fall als mobiles Endgerät 3 ausgebildet ist.

Das Sicherheitsgerät 2 kann generell von einem Sicherheitsschalter, einem Zugangskontrollsystem oder als Sicherheitsgerät 2 zur Auswahl von Betriebsarten eines Sicherheitssystems ausgebildet sein. Weiterhin kann das Sicherheitsgerät 2 auch ein Busmodul sein.

Im vorliegenden Fall bildet das Sicherheitsgerät 2 ein Sicherheitszuhaltesystem aus.

Das Sicherheitszuhaltesystem gewährleistet ein sicheres Zuhalten einer trennenden Schutzeinrichtung, wie zum Beispiel einer Schutztür. Das Sicherheitsgerät 2 umfasst ein Zuhaltemodul, welches stationär an einem Rahmen oder dergleichen angeordnet ist, sowie ein an der Schutztür angeordnetes Griffmodul, welches mit der Schutztür bewegt werden kann. Das Zuhaltemodul hält die Schutztür sicher im geschlossenen Zustand und bewirkt somit eine Sicherung zu einem Gefahrenbereich an einer Maschine oder dergleichen.

Das Sicherheitsgerät 2 umfasst weiterhin eine Anordnung von Bedienelementen 4, 5 mittels denen Funktionen des Sicherheitsgeräts 2 einstellbar sind. Im vorliegenden Fall sind zwei Bedienelemente 4, 5 mit jeweils drei Tastern 4a, 4b, 4c beziehungsweise 5a, 5b, 5c vorgesehen. Generell kann das Sicherheitsgerät 2 auch eine andere Anzahl oder Ausbildung von Bedienelementen 4, 5 aufweisen. Insbesondere können die Bedienelemente 4, 5 auch Schalter aufweisen.

Das Sicherheitsgerät 2 weist weiterhin eine fehlersichere Prozessoreinheit 6 auf. Diese besteht vorteilhaft aus zwei sich zyklisch überwachenden Prozessoren. Dadurch weist das Sicherheitsgerät 2 einen fehlersicheren Aufbau auf. Die fehlersichere Prozessoreinheit 6 weist eine nicht gesondert dargestellte Speichereinheit auf, in welcher eine Konfiguration des Sicherheitsgeräts 2 fehlersicher gespeichert ist.

Das dem Sicherheitsgerät 2 zugeordnete mobile Endgerät 3 ist im vorliegenden Fall als Smartphone ausgebildet, dessen Bildschirm ein Touchpanel bildet, an welchen in bekannter Weise ein Benutzer durch Berühren des Bildschirms Eingabegrößen eingeben kann.

Alternativ kann das mobile Endgerät 3 als Personal Computer, Tablet oder auch als VR (virtual reality)- oder AR (augmented reality)-Brille ausgebildet sein. Je nach Ausbildung können auch andere Eingabemöglichkeiten wie Eingaben über Stimmen-Befehle oder visuelle Eingaben vorgesehen sein.

Das mobile Endgerät 3 weist ein nicht dargestelltes Steuerungsmodul auf, das von einem Softwaremodul, insbesondere in Form einer App ausgebildet ist. Im Gegensatz zum Sicherheitsgerät 2 weist das mobile Endgerät 3 keinen fehlersicheren Aufbau auf, obwohl dies prinzipiell möglich wäre.

Zwischen dem Sicherheitsgerät 2 und dem mobilen Endgerät 3 ist eine drahtlose, das heißt berührungslos arbeitende Datenübertragungsstrecke vorgesehen. Die Datenübertragungsstrecke ist im vorliegenden Fall als Funkstrecke ausgebildet, über welche bidirektional Funksignale übertragen werden können. Hierzu ist sowohl im Sicherheitsgerät 2 als auch im mobilen Endgerät 3 eine Sende-Empfangseinheit vorgesehen, mit der Funksignale gesendet und empfangen werden können. Generell kann auch eine leitungsgebundene Datenübertragungsstrecke zwischen dem Sicherheitsgerät 2 und dem mobilen Endgerät 3 vorgesehen sein.

Bei der Sicherheitseinrichtung 1 können erfindungsgemäß abhängig von einer in der fehlersicheren Prozessoreinheit 6 gespeicherten Konfiguration im mobilen Endgerät 3 fehlersicher virtuelle Funktionselemente generiert und aktiviert werden. Dadurch wird die Funktionalität des Sicherheitsgeräts 2 erweitert, ohne dass hierfür die Hardware des Sicherheitsgeräts 2 geändert werden muss. Ein Benutzer kann dann durch Tätigen von Eingaben an den virtuellen Funktionselementen des mobilen Endgeräts 3 völlig unabhängig vom Installationsort des Sicherheitsgeräts 2 dessen Funktion steuern.

Die Figuren 1 bis 4 zeigen ein erstes Ausführungsbeispiel zur Generierung und Aktivierung von virtuellen Funktionselementen in Form von virtuellen Bedieneinheiten 7, 8, 9, die wieder Taster 7a bis 7c, 8a bis 8c, 9a bis 9c aufweisen. Figur 1 zeigt einen ersten Schritt dieses Verfahrens. Zum Aufbau einer Session wird eine bidirektionale Datenübertragung zwischen dem Sicherheitsgerät 2 und dem mobilen Endgerät 3 aufgebaut (Pfeil a in Figur 1). Dabei erfolgt die Datenübertragung verschlüsselt, so dass diese nicht von Dritten manipuliert werden kann.

Anschließend wird von der fehlersicheren Prozessoreinheit 6 die Konfiguration aus der Speichereinheit ausgelesen (Pfeil b in Figur 1). Die Konfiguration umfasst insbesondere Bedienelemente kennzeichnende Parameter wie zum Beispiel Art und Anzahl deren Elemente (Taster oder Schalter), Farben, Werte, sichere Zustände der Elemente und so weiter.

Nach Einlesen der Konfiguration in das Steuerungsmodul zeigt dieses auf dem Bildschirm des mobilen Endgeräts 3 die zur Verfügung stehenden virtuellen Bedieneinheiten 7, 8, 9 an. Mit dem Pfeil I ist veranschaulicht, dass durch Scrollen weitere virtuelle Bedieneinheiten angezeigt werden können.

Danach kann der Benutzer durch Betätigen eines Elements einer virtuellen Bedieneinheit 7, 8, 9 dieses auswählen. Im vorliegenden Fall handelt es sich um die virtuelle Bedieneinheit 9, die durch Betätigen des Tasters 9a auf dem Bildschirm ausgewählt wird. Bei der virtuellen Bedieneinheit 9 handelt es sich um ein Bedienelement, das physikalisch nicht am Sicherheitsgerät 2 vorhanden ist.

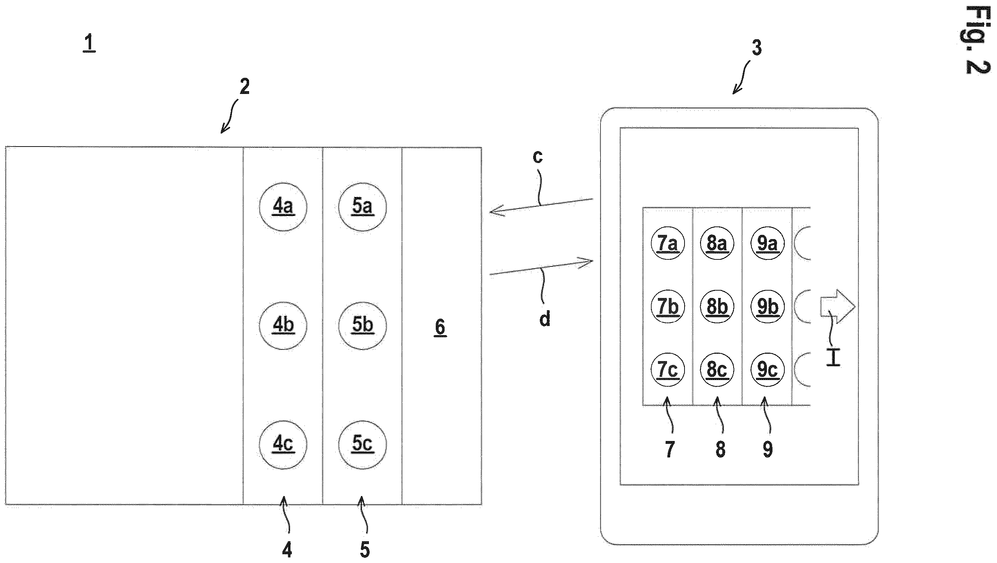

Diese Auswahl wird mit einem Select-Signal (Pfeil c in Figur 2) vom Steuerungsmodul an die fehlersichere Prozessoreinheit 6 gesendet. Dort wird die Auswahl geprüft. Wenn diese als korrekt und gültig in der fehlersicheren Prozessoreinheit 6 erkannt wird, wird ein Verifikationssignal an das Steuerungsmodul gesendet (Pfeil d in Figur 2).

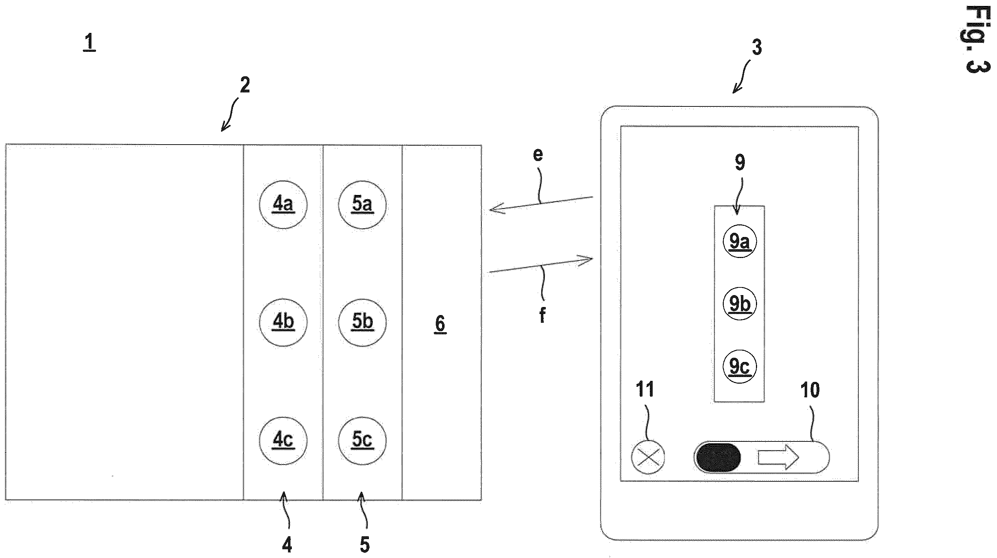

Danach wird die Auswahl zur Bestätigung an das Steuerungsmodul gesendet. Wird die Auswahl vom Benutzer als korrekt erkannt und bestätigt, sendet das Steuerungsmodul an die fehlersichere Prozessoreinheit 6 ein Bestätigungssignal (Pfeil e in Figur 3), wobei die fehlersichere Prozessoreinheit 6 als Quittierung ebenfalls ein Bestätigungssignal an das Steuerungsmodul sendet (Pfeil f in Figur 3).

Damit ist die variable Bedieneinheit 9 ausgewählt und kann bestätigt werden, wie Figur 3 zeigt. Dabei ist in Figur 3 ein Bestätigungs-Button 10 zur Bestätigung einer Eingabe und ein Cancel-Button 11 zum Löschen einer Eingabe dargestellt.

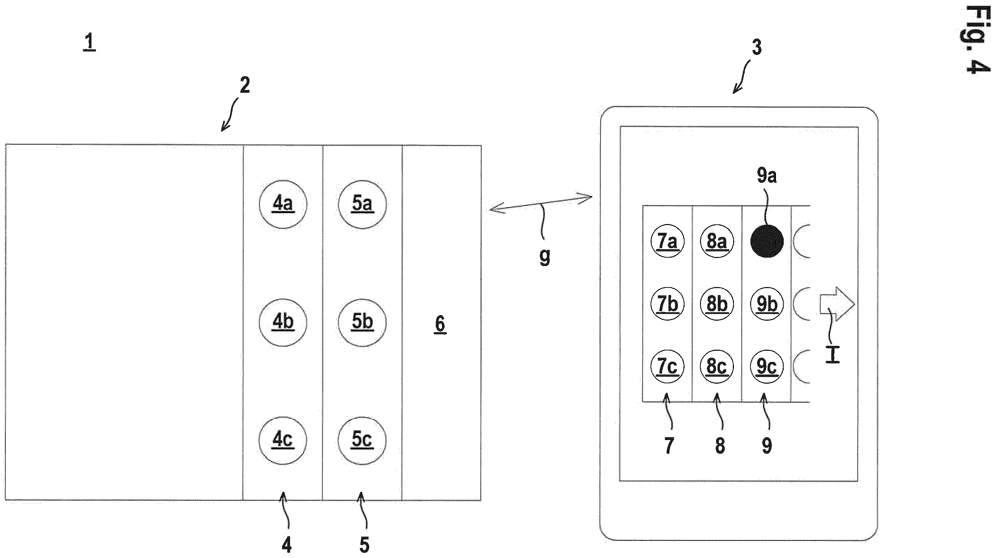

Figur 4 zeigt die Situation, wenn die virtuelle Bedieneinheit 9 aktiviert ist, wobei die Taste 9a gedrückt ist. Mit dem Pfeil g ist ein zyklischer Datenaustausch der fehlersicheren Prozessoreinheit 6 und des mobilen Endgeräts 3 dargestellt, wodurch die Anwesenheit und korrekte Funktion des mobilen Endgeräts 3 fortlaufend kontrolliert wird. Tritt hierbei ein Fehler auf, fallen die virtuellen Bedieneinheiten 7, 8, 9 in den sicheren Zustand zurück.

Figur 4 zeigt weitere virtuelle Bedieneinheiten 7, 8, die auf dieselbe Weise ausgewählt und aktiviert werden können. Diese virtuellen Bedieneinheiten 7, 8 entsprechen in ihrer Funktion den Bedienelementen 4, 5. Damit kann wahlweise durch Betätigen des Bedienelements 4 oder der virtuellen Bedieneinheit 7 ein und dieselbe Funktion des Sicherheitsgeräts 2 geändert werden. Entsprechendes gilt für das Bedienelement 5 und die virtuelle Bedieneinheit 8.

Tritt bei dem vorstehenden Verfahren ein Fehler in der Auswahl einer virtuellen Bedieneinheit 9 auf so erfolgt keine Bestätigung der Auswahl und die virtuelle Bedieneinheit 9 wird nicht aktiviert.

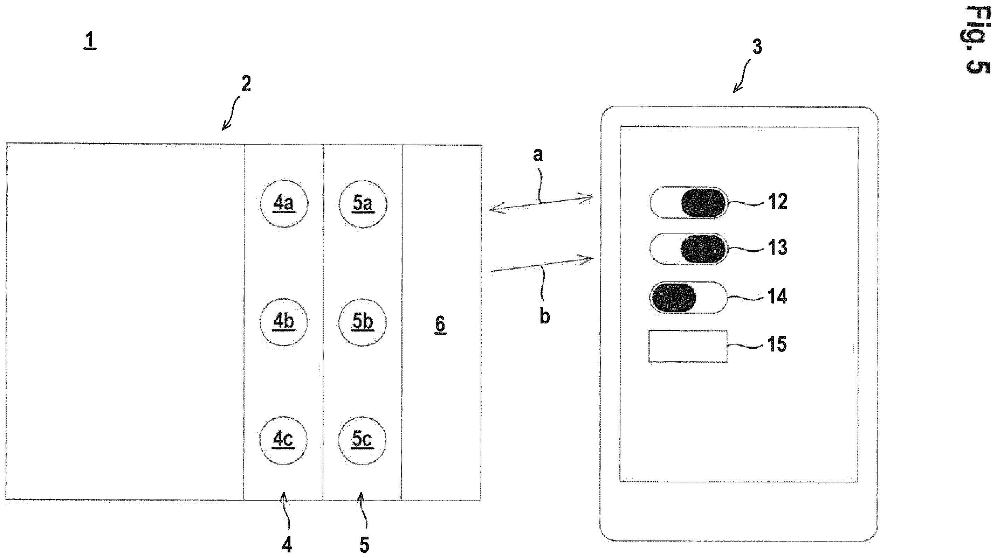

Figur 5 zeigt eine Variante der Ausführungsform gemäß den Figuren 1 bis 4.

Dabei zeigt Figur 5 ein Konfigurationsmenü, das entsprechend dem Verfahren gemäß den Figuren 1 bis 4 ausgewählt und aktiviert werden kann. Das Konfigurationsmenü weist drei Eingabe-Buttons 12, 13, 14 und eine numerische Eingabe 15 auf.

Die Eingabe-Buttons 12, 13 befinden sich in ihrer Enabled-Stellung, so dass für diese Eingabe-Buttons 12, 13 hinterlegte Funktionen des Sicherheitsgeräts 2 aktiviert sind. Der Eingabe-Button 14 befindet sich in seiner Disabled-Stellung, so dass für diesen Eingabe-Button 14 hinterlegte Funktionen deaktiviert sind. Mit der numerischen Eingabe 15 können beispielsweise Parameterwerte in Form von alphanumerischen Zeichen vorgegeben werden.

### Bezugszeichenliste

- (1): Sicherheitseinrichtung
- (2): Sicherheitsgerät
- (3): mobiles Endgerät
- (4): Bedienelement
- (4a - c): Taster
- (5): Bedienelement
- (5a - c): Taster
- (6): fehlersichere Prozessoreinheit
- (7): virtuelle Bedieneinheit
- (7a - c): Taster
- (8): virtuelle Bedieneinheit
- (8a - c): Taster
- (9): virtuelle Bedieneinheit
- (9a - c): Taster
- (10): Bestätigungs-Button
- (11): Cancel-Button
- (12): Eingabe-Button
- (13): Eingabe-Button
- (14): Eingabe-Button
- (15): numerische Eingabe

## Patentansprüche

1. Sicherheitseinrichtung (1) mit einem eine fehlersichere Prozessoreinheit (6) aufweisenden Sicherheitsgerät (2) und einem dem Sicherheitsgerät (2) zugeordneten Endgerät mit einem Steuerungsmodul, wobei das Steuerungsmodul ausgebildet ist, eine Datenübertragung zwischen diesem und der fehlersicheren Prozessoreinheit (6) aufzubauen, 1³ bei welcher Daten in verschlüsselter Form übertragen werden,
wobei mittels der Datenübertragung von der fehlersicheren Prozessoreinheit (6) eine Konfiguration mit Funktionalitäten des Sicherheitsgeräts (2) an das Steuerungsmodul übertragen wird,
wobei mittels des Steuerungsmoduls abhängig von der Konfiguration im Endgerät wenigstens ein virtuelles Funktionselement für das Sicherheitsgerät (2) aktiviert wird,
wobei das virtuelle Funktionselement eine virtuelle Bedieneinheit (7, 8, 9) ist, mit der ein Benutzer des Endgeräts Funktionen des Sicherheitsgeräts (2) steuern beziehungsweise einstellen kann und
die virtuelle Bedieneinheit (7, 8, 9) eine Funktionserweiterung des Sicherheitsgeräts (2) bildet,
**dadurch gekennzeichnet, dass**
die Sicherheitseinrichtung (1) eingerichtet ist, folgende Schritte auszuführen:
- Übertragen der Konfiguration von der fehlersicheren Prozessoreinheit (6) an das Steuerungsmodul,
- Anzeigen der Konfiguration im Endgerät,
- Senden einer Benutzerauswahl von virtuellen Funktionselementen an die fehlersichere Prozessoreinheit (6),
- Überprüfen der Auswahl in der fehlersicheren Prozessoreinheit (6) und Verifizieren der Auswahl durch ein von der fehlersicheren Prozessoreinheit (6) an das Steuerungsmodul gesendetes Verifikationssignal,
- Bestätigen des Verifikationssignals durch das Steuerungsmodul durch Aussenden eines Bestätigungssignals an die fehlersichere Prozessoreinheit (6),
- Senden eines Bestätigungssignals zur Gegenbestätigung durch die fehlersichere Prozessoreinheit (6) an das Steuerungsmodul, worauf das ausgewählte Funktionselement aktiviert wird.

2. Sicherheitseinrichtung (1) nach Anspruch 1, **dadurch gekennzeichnet, dass** die Konfiguration Parameter umfasst, welche die Funktionen von virtuellen Bedieneinheiten (7, 8, 9) oder Konfigurationsmenüs definieren.

3. Sicherheitseinrichtung (1) nach einem der Ansprüche 1 und 2, **dadurch gekennzeichnet, dass** das Endgerät ein mobiles Endgerät (3) ist.

4. Sicherheitseinrichtung (1) nach einem der Ansprüche 1 bis 3, **dadurch gekennzeichnet, dass** das Endgerät mit dem Steuerungsmodul nicht fehlersicher ist.

5. Sicherheitseinrichtung (1) nach einem der Ansprüche 1 bis 4, **dadurch gekennzeichnet, dass** das Sicherheitsgerät (2) ein Sicherheitszuhaltesystem, ein Sicherheitsschalter, ein Busmodul, ein Zugangskontrollsystem oder Betriebsartenauswahlsystem ist.

6. Sicherheitseinrichtung (1) nach einem der Ansprüche 1 bis 5, **dadurch gekennzeichnet, dass** die Datenübertragung über eine leitungsgebundene oder drahtlose Datenübertragungsstrecke erfolgt.

7. Sicherheitseinrichtung (1) nach einem der Ansprüche 1 bis 6, **dadurch gekennzeichnet, dass** eine Session einer Datenübertragung durch ein Startsignal des Steuerungsmoduls im Endgerät initiiert wird.

8. Verfahren zum Betrieb einer Sicherheitseinrichtung (1) mit einem eine fehlersichere Prozessoreinheit (6) aufweisenden Sicherheitsgerät (2) und einem dem Sicherheitsgerät (2) zugeordneten Endgerät mit einem Steuerungsmodul, wobei das Steuerungsmodul ausgebildet ist, eine Datenübertragung zwischen diesem und der fehlersicheren Prozessoreinheit (6) aufzubauen, bei welcher Daten in verschlüsselter Form übertragen werden, wobei
mittels der Datenübertragung von der fehlersicheren Prozessoreinheit (6) eine Konfiguration mit Funktionalitäten des Sicherheitsgeräts (2) an das Steuerungsmodul übertragen wird, wobei
mittels des Steuerungsmoduls abhängig von der Konfiguration im Endgerät wenigstens ein virtuelles Funktionselement für das Sicherheitsgerät (2) aktiviert wird,
wobei das virtuelle Funktionselement eine virtuelle Bedieneinheit (7, 8, 9) ist, mit der ein Benutzer des Endgeräts Funktionen des Sicherheitsgeräts (2) steuern beziehungsweise einstellen kann und
die virtuelle Bedieneinheit (7, 8, 9) eine Funktionserweiterung des Sicherheitsgeräts (2) bildet,
**dadurch gekennzeichnet, dass**
die Sicherheitseinrichtung (1) folgende Schritte ausführt:
- Übertragen der Konfiguration von der fehlersicheren Prozessoreinheit (6) an das Steuerungsmodul,
- Anzeigen der Konfiguration im Endgerät,
- Senden einer Benutzerauswahl von virtuellen Funktionselementen an die fehlersichere Prozessoreinheit (6),
- Überprüfen der Auswahl in der fehlersicheren Prozessoreinheit (6) und Verifizieren der Auswahl durch ein von der fehlersicheren Prozessoreinheit (6) an das Steuerungsmodul gesendetes Verifikationssignal,
- Bestätigen des Verifikationssignals durch das Steuerungsmodul durch Aussenden eines Bestätigungssignals an die fehlersichere Prozessoreinheit (6),
- Senden eines Bestätigungssignals zur Gegenbestätigung durch die fehlersichere Prozessoreinheit (6) an das Steuerungsmodul, worauf das ausgewählte virtuelle Funktionselement aktiviert wird.

## Claims

1. Safety system (1) with a safety device (2) comprising a fail-safe processor unit (6) and a terminal device assigned to the safety device (2) with a control module, wherein the control module is designed to establish data transmission between itself and the fail-safe processor unit (6), in which data is transmitted in encrypted form, which transmit data in encrypted form, wherein a configuration with functionalities of the safety device (2) is transmitted to the control module by means of the data transmission from the fail-safe processor unit (6),
wherein, by means of the control module, at least one virtual functional element for the safety device (2) is activated in the terminal device depending on the configuration,
wherein the virtual function element is a virtual operating unit (7, 8, 9) with which a user of the terminal device can control or set functions of the security device (2) and the virtual operating unit (7, 8, 9) forms a function extension of the security device (2),
**characterised in that** the safety system (1) is designed to perform the following steps:
- transferring the configuration from the fail-safe processor unit (6) to the control module,
- displaying the configuration in the end device,
- sending a user selection of virtual function elements to the fail-safe processor unit (6),
- checking the selection in the fail-safe processor unit (6) and verifying the selection by means of a verification signal sent by the fail-safe processor unit (6) to the control module,
- confirming the verification signal by the control module by sending a confirmation signal to the fail-safe processor unit (6),
- sending a confirmation signal to the fail-safe processor unit (6) for counter-confirmation, whereupon the selected functional element is activated.

2. Safety system (1) according to claim 1, **characterised in that** the configuration comprises parameters which define the functions of virtual operating units (7, 8, 9) or configuration menus.

3. Safety system (1) according to one of claims 1 and 2, **characterised in that** the terminal device is a mobile terminal device (3).

4. Safety device (I) according to one of claims 1 to 3, **characterised in that** the terminal device is not fail-safe with the control module.

5. Safety system (1) according to one of claims 1 to 4, **characterised in that** the safety device (2) is a safety interlock system, a safety switch, a bus module, an access control system or an operating mode selection system.

6. Safety system (1) according to one of claims 1 to 5, **characterised in that** the data transmission takes place via a wired or wireless data transmission link.

7. Safety system (1) according to one of claims 1 to 6, **characterised in that** a session of data transmission is initiated by a start signal from the control module in the terminal device.

8. Method for operating a safety system (1) with a safety unit (2) having a fail-safe processor unit (6) and a terminal device assigned to the safety unit (2) with a control module, wherein the control module is designed to establish data transmission between itself and the fail-safe processor unit (6), which transmit data in encrypted form, wherein a configuration with functionalities of the safety device (2) is transmitted to the control module by means of the data transmission from the fail-safe processor unit (6),
wherein, by means of the control module, at least one virtual functional element for the safety device (2) is activated in the end device depending on the configuration,
wherein the virtual function element is a virtual operating unit (7, 8, 9) with which a user of the terminal device can control or set functions of the safety device (2), and
the virtual operating unit (7, 8, 9) forms a function extension of the safety device (2),
**characterised in that** the safety system (1) performs the following steps:
- transmitting the configuration from the fail-safe processor unit (6) to the control module,
- displaying the configuration in the end device,
- sending a user selection of virtual function elements to the fail-safe processor unit (6),
- checking the selection in the fail-safe processor unit (6) and verifying the selection by means of a verification signal sent by the fail-safe processor unit (6) to the control module,
- confirming the verification signal by the control module by sending a confirmation signal to the fail-safe processor unit (6),
- sending a confirmation signal to the control module for counter-confirmation by the fail-safe processor unit (6), whereupon the selected virtual function element is activated.

## Revendications

1. Dispositif de sécurité (1) muni d'un appareil de sécurité (2) comprenant une unité de traitement à sécurité intégrée (6) et d'un terminal associé à l'appareil de sécurité (2) avec un module de commande, dans lequel le module de commande est conçu pour établir une transmission de données entre lui-même et l'unité de traitement à sécurité intégrée (6), dans lequel les données sont transmises sous forme cryptée,
dans lequel une configuration dotée des fonctionnalités de l'appareil de sécurité (2) est transmise de l'unité de traitement à sécurité intégrée (6) au module de commande au moyen de la transmission de données (6) vers le module de commande,
dans lequel, au moyen du module de commande, au moins un élément fonctionnel virtuel pour l'appareil de sécurité (2) est activé dans le terminal en fonction de la configuration,
dans lequel l'élément fonctionnel virtuel est une unité de commande virtuelle (7, 8, 9) avec laquelle un utilisateur du terminal peut commander ou régler des fonctions de l'appareil de sécurité (2) et l'unité de commande virtuelle (7, 8, 9) forme une extension fonctionnelle de l'appareil de sécurité (2),
**caractérisé en ce que** le dispositif de sécurité (1) est conçu pour exécuter les étapes suivantes :
- transfert de la configuration de l'unité de traitement à sécurité intégrée (6) vers le module de commande,
- affichage de la configuration dans le terminal,
- l'envoi d'une sélection d'éléments de fonction virtuels effectuée par l'utilisateur à l'unité de traitement de sécurité (6),
- vérification de la sélection dans l'unité de traitement de sécurité (6) et vérification de la sélection au moyen d'un signal de vérification envoyé par l'unité de traitement de sécurité (6) au module de commande,
- confirmation du signal de vérification par le module de commande en envoyant un signal de confirmation ( ) à l'unité de traitement de sécurité (6),
- envoi d'un signal de confirmation à l'unité de traitement de sécurité (6) pour contre-confirmation, après quoi l'élément fonctionnel sélectionné est activé.

2. Dispositif de sécurité (1) selon la revendication 1, **caractérisé en ce que** la configuration comprend des paramètres qui définissent les fonctions d'unités de commande virtuelles (7, 8, 9) ou des menus de configuration.

3. Dispositif de sécurité (1) selon l'une des revendications 1 et 2, **caractérisé en ce que** le terminal est un terminal mobile (3).

4. Dispositif de sécurité (1) selon l'une des revendications 1 à 3, **caractérisé en ce que** le terminal n'est pas à sécurité intégrée avec le module de commande.

5. Dispositif de sécurité (1) selon l'une des revendications 1 à 4, **caractérisé en ce que** l'appareil de sécurité (2) est un système de verrouillage de sécurité, un interrupteur de sécurité, un module de bus, un système de contrôle d'accès ou un système de sélection du mode de fonctionnement.

6. Dispositif de sécurité (1) selon l'une des revendications 1 à 5, **caractérisé en ce que** la transmission des données s'effectue via une liaison de transmission de données filaire ou sans fil.

7. Dispositif de sécurité (1) selon l'une des revendications 1 à 6, **caractérisé en ce qu'**une session de transmission de données est lancée par un signal de démarrage provenant du module de commande dans le terminal.

8. Procédé de fonctionnement d'un dispositif de sécurité (1) avec une unité de sécurité (2) comportant une unité de traitement à sécurité intégrée (6) et un terminal associé à l'unité de sécurité (2) avec un module de commande, le module de commande étant conçu pour établir une transmission de données entre lui-même et l'unité de traitement à sécurité intégrée (6), qui transmettent des données sous forme cryptée, dans lequel une configuration avec les fonctionnalités de l'appareil de sécurité (2) est transmise au module de commande au moyen de la transmission de données provenant de l'unité de traitement à sécurité intégrée (6),
dans lequel, au moyen du module de commande, au moins un élément fonctionnel virtuel pour l'appareil de sécurité (2) est activé dans le terminal en fonction de la configuration,
dans lequel l'élément fonctionnel virtuel est une unité de commande virtuelle (7, 8, 9) à l'aide de laquelle un utilisateur du terminal peut commander ou régler des fonctions de l'appareil de sécurité (2), et
l'unité de commande virtuelle (7, 8, 9) forme une extension fonctionnelle de l'appareil de sécurité (2),
**caractérisé en ce que** le dispositif de sécurité (1) effectue les étapes suivantes :
- transmission de la configuration de l'unité de traitement à sécurité intégrée (6) au module de commande,
- affichage de la configuration dans le terminal,
- envoi d'une sélection utilisateur d'éléments de fonction virtuels à l'unité de traitement de sécurité (6),
- vérification de la sélection dans l'unité de traitement à sécurité intégrée (6) et vérification de la sélection au moyen d'un signal de vérification envoyé par l'unité de traitement à sécurité intégrée (6) au module d' de commande,
- confirmant le signal de vérification par le module de commande en envoyant un signal de confirmation à l'unité de traitement de sécurité (6),
- envoi d'un signal de confirmation au module de commande pour contre-confirmation par l'unité de traitement de sécurité (6), après quoi l'élément de fonction virtuelle sélectionné est activé.
